# EUROPÄISCHE PATENTANMELDUNG

(11) **EP 2 180 275 A2**
(43) Veröffentlichungstag der Anmeldung: **28.04.2010**
(21) Anmeldenummer: 09173840.1
(22) Anmeldetag: 22.10.2009
(51) Int. Cl.: F25B 30/02, F24D 11/02

(54) **Luftwärmepumpe, Verfahren zur Freilandinstallation einer Luftwärmepumpe sowie Freilandanordnung einer Luftwärmepumpe**

(30) Priorität: 23.10.2008 DE 102008052931
(71) Anmelder: SolarHybrid AG, 04420 Markranstädt (DE)
(72) Erfinder: Schubert, Frank, 29646, Bispingen (DE); Drews, Dirk, 8718, Schänis (CH)
(74) Vertreter: Feder, Wolf-Dietrich

(57) **Zusammenfassung**

Die Erfindung betrifft eine Luftwärmepumpe zur Gewinnung von Wärmeenergie aus Umgebungsluft mit einem von der Umgebungsluft überströmbaren Luftwärmetauscher (2) und einem Kältemittelverdichter (3) zur Erhöhung der Temperatur der aus der Umgebungsluft gewonnenen Wärmeenergie, wobei die Luftwärmepumpe eine Überflursektion (4) und eine erdversenkbare Unterftursektion (5) aufweist und der Luftwärmetauscher (2) in der Überflursektion (4) und der Kältemittelverdichter (3) in der Unterflursektion (5) angeordnet ist. Darüber hinaus betrifft die Erfindung ein Verfahren zur Freilandinstallation einer Luftwärmepumpe, bei welchem die Unterflursektion (5) zumindest teilweise erdversenkt und die Überflursektion (4) oberhalb des Erdbodens angeordnet wird. Weiterhin betrifft die Erfindung eine Freiluftanordnung einer Luftwärmepumpe, bei welcher die Überflursektion (4) oberhalb des Erdbodens und die Unterflursektion (5) zumindest teilweise innerhalb des Erdbodens angeordnet ist.

## Beschreibung

Die Erfindung betrifft eine Luftwärmepumpe zur Gewinnung von Wärmeenergie aus Umgebungsluft mit einem von der Umgebungsluft überströmbaren Luftwärmetauscher und einem Kältemittelverdichter zur Erhöhung der Temperatur der aus der Umgebungsluft gewonnenen Wärmeenergie. Weitere Gegenstände der Erfindung bilden ein Verfahren zur Freilandinstallation und eine Freilandanordnung einer entsprechenden Luftwärmepumpe.

Luftwärmepumpen werden in der Haustechnik zur Wärmeversorgung oder Warmwasserversorgung genutzt und verfügen über einen geschlossenen Kältemittelkreislauf, über den Wärmeenergie aus der Umgebungsluft aufgenommen, auf höhere, in der Haustechnik erforderlich Temperaturen gebracht und in ein Hausheizsystem eingespeist wird. Beim Durchströmen des Luftwärmetauschers nimmt das Kältemittel Wärmeenergie aus der Umgebungsluft auf, wonach das energiereichere Kältemittel über einen Kältemittelverdichter auf ein höheres Druckniveau verdichtet wird, so dass sich höhere Temperaturen der aus der Umgebungsluft gewonnenen Wärmeenergie ergeben, wie diese in der Haustechnik etwa zur Warmwasserbereitung erforderlich sind. Anschließend wird das verdichtete Kältemittel einem Wärmetauscher zugeführt, über den die aus der Umgebungsluft gewonnene Wärmeenergie und die Verdichtungsenergie auf ein Wärmeträgerfluid des Hausheizsystems, meist Wasser, übertragen wird. Nach erfolgter Wärmeübertragung auf das Wärmeträgerfluid des Hausheizsystems wird das Kältemittel zunächst entspannt und anschließend erneut durch den Luftwärmetauscher geführt.

Als besonders montagefreundlich haben sich Luftwärmepumpe in Kompaktbauweise erwiesen, bei welchen die bei der Inbetriebnahme erforderlichen Installationsarbeiten zügig auch durch kältetechnisch ungeschulte Installateure erfolgen kann. Denn bei Luftwärmepumpe in Kompaktbauweise ist der gesamte Kältemittelkreis in einem geschlossenen Gehäuse untergebracht, weshalb es möglich ist, die Luftwärmepumpe quasi steckfertig an das Heizsystem des Hauses anzuschließen.

Diese Art kompakt bauender Luftwärmepumpen hat sich in der Vergangenheit jedoch insbesondere bei einer Freilandanordnung, beispielsweise im Gartenbereich des zu versorgenden Hauses, als problematisch erwiesen.

Ein erster Nachteil liegt in dem vergleichsweise hohen Geräuschpegel beim Betrieb der Luftwärmepumpe, der in erster Linie durch den Kältemittelverdichter verursacht wird und insbesondere bei einer Freilandaufstellung zu störenden Lärmbelästigungen führt.

Dieses Problem des vergleichsweise hohen Geräuschpegels ergibt sich bei der Freilandinstallation sämtlicher Arten von Luftwärmepumpen, bei welchen der lärmverursachende Kältemittelverdichter außerhalb des Gebäudes angeordnet ist.

Hervorzuheben sind jedoch Luftwärmepumpen mit drehzahlgeregeltem Kältemittelverdichter, bei welchen zur Vermeidung von Überleistungen die Drehzahl und damit die Förderleistung des Kältemittelverdichters verändert wird, um die Wärmeleistung der Luftwärmepumpe an die klimatischen Gegebenheiten, insbesondere die Außenlufttemperatur und die damit verbundene Veränderung einerseits des Wärmebedarfs des zu versorgenden Gebäudes und andererseits der sich ändernden Pumpleistung der Wärmepumpe, anzupassen.

Üblicherweise werden die Verdichterdrehzahlen derart ausgelegt, dass am eigentlichen Auslegungspunkt der Wärmepumpe, beispielsweise bei -15°C Außenlufttemperatur, eine überhöhte Drehzahl vorliegt und der Verdichter bei einem oberhalb des Auslegungspunkts liegenden, häufiger auftretenden Betriebspunkt, beispielsweise einer Temperatur +5°C in einem optimalen Drehzahlbereich betrieben wird. Mit fallenden Außenlufttemperaturen wird durch die Erhöhung der Verdichterdrehzahl der mit den fallenden Außenlufttemperaturen steigende Wärmebedarf des Gebäudes bei gleichzeitig fallender Wärmeleistung der Luftwärmepumpe zwar gedeckt, hiermit geht jedoch eine deutliche Anhebung des Geräuschpegels einher, wobei sich im Bereich größerer Verdichterdrehzahlen oberhalb der optimalen Nenndrehzahl hochfrequente, turbinenartige Geräusche ergeben, die vom menschlichen Gehör als sehr störend empfunden werden.

Neben der Geräuschentwicklung ist als zweiter Nachteil bei kompakt bauenden Luftwärmepumpe das in der Praxis immer wieder auftretende Problem des Einfrierens des Wärmetauschers zu nennen. Ungeachtet aller Dämmaßnahmen besteht im Störfall bei winterlichen Stromausfällen eine erhebliche Gefahr, dass der wasserführende Wärmetauscher einfriert, was in der Regel einen Totalschaden der Luftwärmepumpe durch Eindringen von Wasser in den Kältemittelkreislauf zur Folge hat. Die Einfrierproblematik kann dadurch noch verstärkt werden, dass sich infolge von Abtauvorgängen des Luftwärmetauschers in winterlichen Situationen Eisschichten unterhalb des Luftwärmetauschers bilden, die sich, nach mehrmaliger Abtauung, eisbergartig aufschichten können. Diese Eisschichten wie auch das oftmals als Betonsockel ausgebildete Fundament der Luftwärmepumpe bilden eine Art Kältespeicher, die ein Einfrieren des Wärmetauschers im Störfall noch begünstigen.

**Aufgabe** der Erfindung ist es, eine Luftwärmepumpe, ein Verfahren zur Freilandinstallation einer Luftwärmepumpe sowie eine Freilandanordnung einer Luftwärmepumpe anzugeben, die sich durch einen geringen Montageaufwand bei der Installation auszeichnen und einen gleichsam geräuscharmen wie frostsicheren Betrieb erlauben.

Diese Aufgabe wird bei einer Luftwärmepumpe der eingangs genannten Art dadurch **gelöst**, dass die Luftwärmepumpe eine Überflursektion und eine erdversenkbare Unterflursektion aufweist, wobei der Luftwärmetauscher in der Überflursektion und der Kältemittelverdichter in der Unterflursektion angeordnet ist.

Durch die Aufteilung der Luftwärmepumpe in eine Überflursektion und eine erdversenkbare Unterflursektion lässt sich der Kältemittelverdichter als Hauptschallquelle der Luftwärmepumpe in einem unter der Erdoberfläche liegenden Erdschacht versenken, wodurch sich die in der Umgebung der Luftwärmepumpe wahrnehmbaren Betriebsgeräusche deutlich reduzieren. Die Anordnung der Unterflursektion im in einigen zehn Zentimetern Tiefe frostfreien Erdreich erlaubt zudem einen frostsicheren Aufbau, indem alle einfriergefährdeten Komponenten in dieser Sektion angeordnet werden.

Im Hinblick auf eine einfache Montage wird in Ausgestaltung des Erfindungsgedankens vorgeschlagen, dass die Überflursektion und die Unterflursektion in baulicher Einheit miteinander verbunden sind, wodurch sich beide Einheiten gemeinsam handhaben und ähnlich einer Luftwärmepumpe in Kompaktbauweise in einem Schritt installieren lassen. Überflursektion und Unterflursektion können eine steckfertige Baugruppe bilden, die sich mit wenigen Handgriffen installieren lässt.

Von Vorteil ist eine Ausgestaltung, nach welcher in der Unterflursektion auch der Wärmetauscher zur Abgabe der Wärmeenergie an ein Heizsystem des Gebäudes angeordnet ist. Durch die Anordnung des Wärmetauschers in der erdversenkten Unterflursektion liegt auch der wasserdurchströmte Heizwasserwärmetauscher im frostfreien Bereich, weshalb die Gefahr, dass dieser in winterlichen Störsituationen einfriert, deutlich verringert ist.

Gemäß einer montage- wie auch wartungsfreundlichen Ausgestaltung wird weiter vorgeschlagen, dass die Luftwärmepumpe eine zumindest teilweise erdversenkbare Unterfluraufnahme aufweist, die einen Schacht zur Aufnahme der Unterflursektion aufweist. Die Unterfluraufnahme kann beispielsweise in der Rohbauphase eines Gebäudes im Gartenbereich des Gebäudes im Erdreich versenkt angeordnet werden. Nach Fertigstellung des Gebäudes können dann die in baulicher Einheit miteinander verbundene Überflursektion und Unterflursektion nach Art eines Steckelements in die Unterfluraufnahme eingesetzt werden, die eine Art Docking-Station für die aus Überflur- und Unterflursektion gebildete Einheit darstellt.

Weiterhin ist vorgesehen, dass die Unterflursektion eine Montageöffnung aufweist, durch welche ein Monteur von außen zur Vornahme von Wartungs- und Montagearbeiten hindurchgreifen kann, ohne dass die Unterflursektion vollständig aus der Unterfluraufnahme herausgehoben werden muss.

In diesem Zusammenhang wird weiter vorgeschlagen, dass die Unterflursektion eine Sperrvorrichtung aufweist, über welche die Unterflursektion in einer Montageposition in der Unterfluraufnahme arretierbar ist, wodurch sich eine lösbare Lagesicherung der Unterfluraufnahme zu Installations- und Wartungszwecken ergibt.

Gemäß einer weiteren Ausgestaltung wird vorgeschlagen, dass die Unterflursektion und die Unterfluraufnahme zumindest in einer Richtung schmaler als die Überflursektion ausgebildet sind. Auf diese Weise entsteht ein seitlicher Überstand der Überflursektion und ein erheblicher Teil des bei der von Zeit zu Zeit erforderlichen Abtauung des Luftwärmetauschers entstehenden Wassers tropft, beispielsweise über eine unter den Lamellen des Luftwärmetauschers angeordnete Tropfschale, seitlich neben der schmaler gehaltenen Unterflursektion zu Boden, in welchem Bereich das Tauwasser versickern kann. In winterlichen Betriebszeiten kann damit die Gefahr einer den Betrieb der Luftwärmepumpe störenden Vereisung durch sich nach und nach auftürmende Abtaueisschichten vermindert werden.

In konstruktiver Hinsicht vorteilhaft ist eine Ausgestaltung, nach welcher zwischen der Überflursektion und der Unterflursektion ein Auflageflansch vorgesehen ist, über welchen die Baugruppe aus Überflursektion und Unterflursektion in der Unterfluraufnahme gehalten und die Unterfluraufnahme gleichzeitig wetterdicht abgeschlossen wird.

Von Vorteil ist eine Ausgestaltung, nach welcher die Überflursektion oberhalb des Anlageflansches stehend und die Unterflursektion unterhalb des Anlageflansches hängend angeordnet ist. Die hängende Anordnung der Unterflursektion erlaubt einen schwadendichten Abschluss der Unterfluraufnahme. Auch können Leitungen, beispielsweise Rohrleitungen eines Hausheizsystems, bis in den unteren Bodenbereich der Unterfluraufnahme geführt werden, ohne dass beim Einsetzen der Unterflursektion die Gefahr besteht, dass diese bei nicht sachgerechter Handhabung von oben her auf den Leitungen abgestellt wird, was deren Zerstörung zur Folge hätte. Weiterhin hat die hängende Anordnung der Unterflursektion den Vorteil, dass unterhalb der Unterflursektion ein Freiraum verbleibt.

Gemäß einer weiteren Ausgestaltung wird vorgeschlagen, dass die Unterflursektion zweigeteilt ausgebildet ist, wobei in einem ersten Teil der Kältemittelverdichter und in einem zweiten Teil der Wärmetauscher angeordnet ist. Diese Ausgestaltung mit zwei seitlich nebeneinander angeordneten Teilen erlaubt eine individuelle Dämmung des Kältemittelverdichters sowie des Wärmetauschers, die mit voneinander verschiedenen Dämmmaterialien versehen werden können. Beispielsweise kann der Kältemittelverdichter mit einem Schalldämmmaterial, insbesondere Steinwolle, versehen werden, wohingegen der Wärmetauscher mit einem Wärmedämmmaterial, insbesondere in Form vor Ort aushärtbarer Schäume, versehen werden kann.

In diesem Zusammenhang wird weiter vorgeschlagen, dass die Unterfluraufnahme zwei Schächte zur Aufnahme jeweils eines Teils aufweist.

Ferner wird vorgeschlagen, dass die Unterfluraufnahme mit einem Anschluss für ein Versorgungsrohr versehen ist. Bei diesem Versorgungsrohr kann es sich um ein Leerrohr handeln, welches in der Rohbauphase mit der Unterfluraufnahme verbunden wird und durch welches im Vorfeld der Inbetriebnahme der Luftwärmepumpe diverse Versorgungsleitungen aus dem Inneren des Gebäudes hinaus geführt werden können, beispielsweise Rohrleitungen für ein Wärmeträgerfluid der Heizungsanlage, Stromversorgungsleitungen usw.

Darüber hinaus wird bei einem Verfahren zur Freilandinstallation einer Luftwärmepumpe der vorstehend beschriebenen Art zur **Lösung** der Aufgabe vorgeschlagen, dass die Unterflursektion zumindest teilweise erdversenkt und die Überflursektion oberhalb des Erdbodens angeordnet ist.

Mit Hilfe einer solchen Installation ergibt sich eine geringe Geräuschkulisse beim Betrieb der Luftwärmepumpe. Durch die Anordnung der erdversenkbaren Unterflursektion unterhalb der Erdoberfläche lässt sich der Kältemittelverdichter als Hauptschallquelle der Luftwärmepumpe in einem unter der Erdoberfläche liegenden Erdschacht versenken, wodurch sich die in der Umgebung der Luftwärmepumpe wahrnehmbaren Betriebsgeräusche deutlich reduzieren. Die erdversenkte Anordnung der Unterflursektion im in einigen zehn Zentimetern Tiefe frostfreien Erdreich erlaubt zudem einen frostsicheren Betrieb, indem alle einfriergefährdeten Komponenten in dieser Sektion angeordnet werden.

Weiter wird vorgeschlagen, dass die Unterfluraufnahme zumindest teilweise erdversenkt angeordnet und anschließend die Unterflursektion in die Unterfluraufnahme eingesetzt wird. Zunächst erfolgt die Erdversenkung der Unterflurbaugruppe, wozu beispielsweise im Rohbaustadium eines Neubaus ein entsprechendes Erdloch ausgehoben, die Unterfluraufnahme eingesetzt und anschließend das Erdreich an die Ränder der Unterfluraufnahme seitlich heran geschoben wird. Nach Fertigstellung des Gebäudes kann dann die Baueinheit aus Überflursektion und Unterflursektion dann mit geringem Aufwand in die Unterflurbaugruppe eingesetzt werden.

Von Vorteil ist eine Ausgestaltung, nach welcher die Unterfluraufnahme vor dem Einsetzen der Unterflursektion mit einem Versorgungsrohr verbunden wird, welches insbesondere als Leerrohr zur späteren Durchführung von Versorgungsleitungen, etwa Wasserrohren oder Elektroleitungen, dienen kann.

Eine weitere Ausgestaltung des Verfahrens sieht vor, dass in dem Versorgungsrohr im Anschluss an dessen Verbindung mit der Unterflursektion Rohrleitungen eines Heizsystems verlegt werden. In diesem Zusammenhang ist es von Vorteil, wenn das Versorgungsrohr keine stark abgewinkelten Abschnitte aufweist, die das nachträgliche Durchführen von Rohrleitungen erschweren würden. Vorteilhaft ist insbesondere eine Ausgestaltung, nach welcher die Winkelstücke des Versorgungsrohres maximal einen Winkel von 30° aufweisen.

Weiter wird vorgeschlagen, dass die Rohrleitungen durch eine über die seitliche Montageöffnung erfolgende Handhabung an den Wärmetauscher angeschlossen werden. Durch die seitliche Montageöffnung im Bereich der Unterflursektion kann der Installateur seitlich in die Unterflursektion hineingreifen und die erforderlichen Anschlussarbeiten vornehmen.

In diesem Zusammenhang wird weiter vorgeschlagen, dass die Unterflursektion zum Anschluss der Rohrleitungen zunächst in eine Montagestellung abgesenkt wird, in welcher die Montageöffnung in etwa in Höhe des oberen Endes der Unterfluraufnahme liegt, und dass die Unterflursektion anschließend vollversenkt wird. In dieser Zwischenstellung ergibt sich ein geringer Abstand zwischen den im unteren Bereich der Unterfluraufnahme angeordneten Rohrleitungen und dem Wärmetauscher, so dass der Arm eines Monteurs lang genug ist, um die erforderlichen Anschlussarbeiten durchführen zu können.

Ferner wird vorgeschlagen, dass die Unterflursektion über eine Sperrvorrichtung in der Montagestellung gehalten wird und die Vollversenkung durch Entsperren der Sperrvorrichtung erfolgt. Durch die Sperrvorrichtung wird die Unterflursektion einer für Montage- und Wartungsarbeiten günstigen Stellung gehalten, in welcher die Montageöffnung in etwa in Höhe des oberen Endes der Unterfluraufnahme liegt. Durch manuelle Betätigung bzw. Entsperrung der beispielsweise nach Art einer Raste oder Klinke ausgebildeten Sperrvorrichtung kann die Unterfluraufnahme anschließend in die vollversenkte Stellung gleiten.

Von Vorteil ist ferner eine Ausgestaltung, nach welcher sich die Rohrleitungen beim Vollversenken der Unterflursektion schlaufenförmig aufrollen. Die Schlaufen können in dem Raum unterhalb der Unterfluraufnahme liegen.

Darüber hinaus wird zur **Lösung** der Aufgabe eine Freilandanordnung einer Luftwärmepumpe der vorbeschriebenen Art vorgeschlagen, bei welcher die Überflursektion oberhalb des Erdbodens und die Unterflursektion zumindest teilweise innerhalb des Erdbodens angeordnet ist, wodurch sich die vorstehend beschriebenen Vorteile insbesondere hinsichtlich der geringen Geräuschentwicklung und Frostsicherheit ergeben.

Weitere Einzelheiten und Vorteile der Erfindung werden nachfolgend unter Zuhilfenahme der beigefügten Zeichnungen von Ausführungsbeispielen erläutert. Darin zeigen:
- Fig. 1:: eine schematische Ansicht einer Luftwärmepumpe gemäß einer ersten Ausführung,
- Fig. 2:: eine der Darstellung in Fig. 1 entsprechende Luftwärmepumpe in ei- ner Montageposition,
- Fig. 3:: eine schematische Ansicht einer zweiten Ausführungsform einer Luft- wärmepumpe und
- Fig. 4:: eine der Darstellung in Fig. 3 entsprechende Luftwärmepumpe in ei- ner Montageposition.

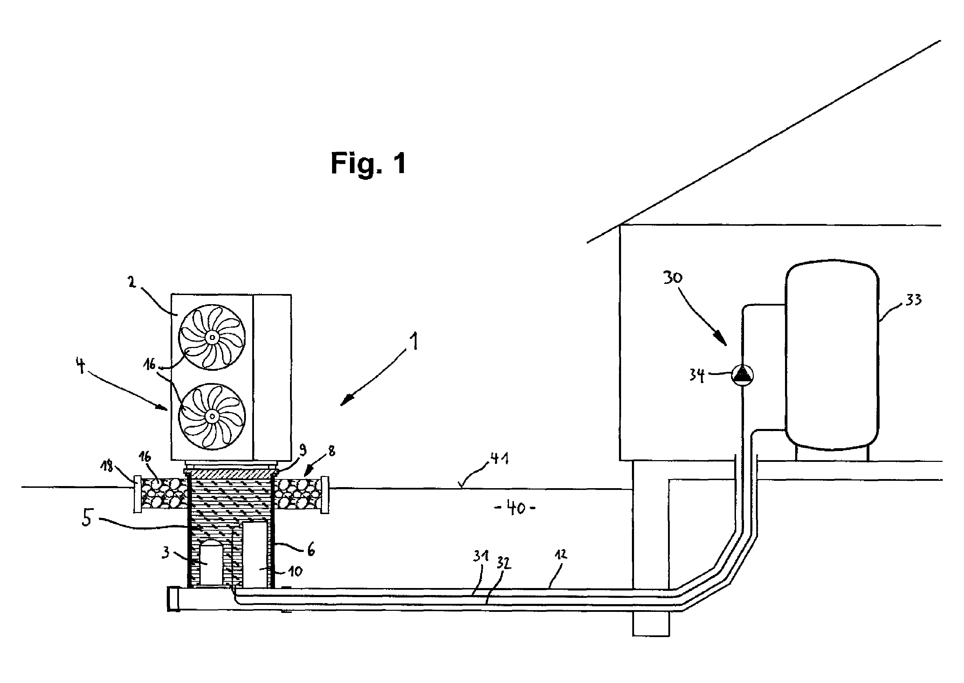

In Fig. 1 dargestellt ist eine Freilandanordnung einer mit einem Heizsystem 30 verbundenen Luftwärmepumpe 1 zur Gewinnung von Wärmeenergie aus der Umgebungsluft.

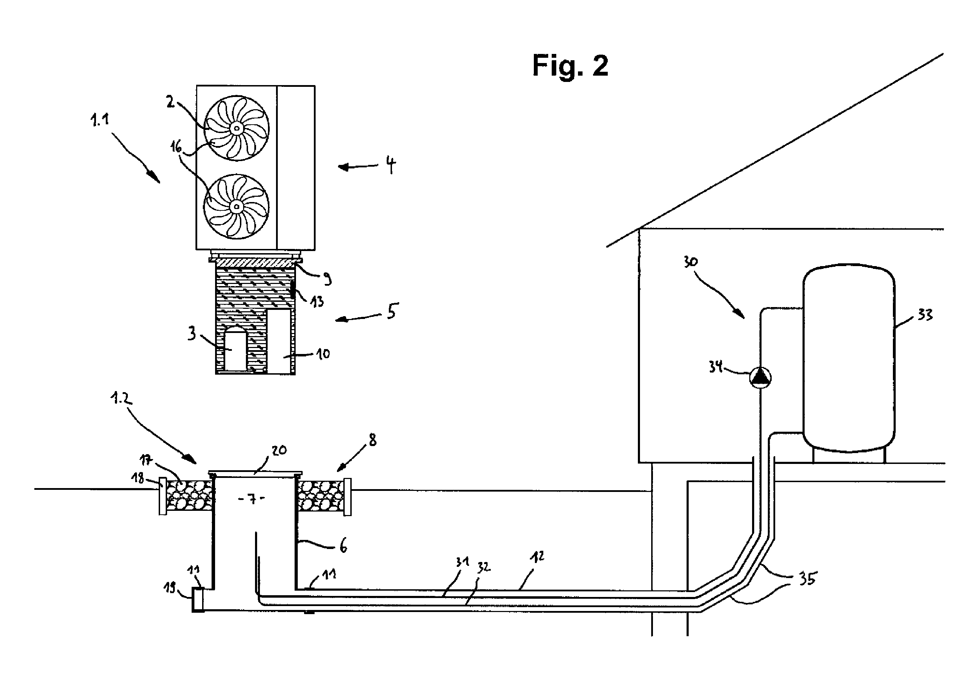

Die Luftwärmepumpe 1 setzt sich, wie die Darstellung in Fig. 2 besser erkennen lässt, aus einer den Luftwärmetauscher 2 beinhaltenden Überflursektion 4 sowie einer erdversenkbaren Unterflursektion 5 zusammen, die in baulicher Einheit miteinander verbunden sind und eine steckfertige Baugruppe bzw. Einheit 1.1 bilden, welche die Bauteile üblicher Luftwärmepumpen in Kompaktbauweise umfasst. Eine zweite Einheit 1.2 der Luftwärmepumpe 1 ist mit der ersten Einheit 1.1 steckverbindbar. Bei der zweiten Einheit 1.2 handelt es sich um eine größtenteils im Erdreich 40 versenkt angeordnete Unterfluraufnahme 6, welche einen nach oben offenen, sich durch die Erdoberfläche 41 hindurch erstreckenden, zylindrischen oder quaderförmigen Schacht 7 bildet, in welchen die Unterflursektion 5 aus einer Position gemäß der Darstellung in Fig. 2 gemäß der Darstellung in Fig. 1 von oben her einsetzbar ist.

In Fig. 1 dargestellt ist die Betriebsstellung der Luftwärmepumpe 1 nach erfolgter Installation. In dieser liegt die Überflursektion 4 oberhalb und die Unterflursektion 5 unterhalb der Erdoberfläche 40 in dem von der Unterfluraufnahme 6 gebildeten Schacht 7. Die Unterflursektion 5 bildet eine Art Maschinenraum, in welchem die in erste Linie lärmverursachenden und frostgefährdeten Bauteile angeordnet sind.

Durch die Anordnung der Unterflursektion 5 unterhalb der Erdoberfläche 41 ist der Kältemittelverdichter 3 als wesentlicher Lärmverursacher unterhalb der Erdoberfläche innerhalb eines geschlossenen Raums angeordnet, weshalb die vom Kältemittelverdichter 3 beim Betrieb der Luftwärmepumpe 1 ausgehenden Schallemissionen nicht oder nur stark abgeschwächt in die Umgebung treten, wodurch sich ein geräuscharmer Betrieb der Luftwärmepumpe 1 ergibt. Die Unterfluraufnahme 6 besteht aus einem für die Anforderungen im Erdreich zugelassenen, witterungsbeständigen Kunststoff.

Beim Betrieb der Luftwärmepumpe 1 wird der im Freien liegende Luftwärmetauscher 2, angetrieben über einen oder mehrere Ventilatoren 16, von Umgebungsluft überströmt. Innerhalb des Luftwärmetauschers 2 strömt ein Kältemittel eines in den Figuren nicht eingezeichneten Kältemittelkreises. Der Luftwärmetauscher 2 bildet den Verdampfer des Kältemittelkreises, in welchem das Kältemittel durch die den Luftwärmetauscher 2 überströmende, wärmere Umgebungsluft erwärmt und verdampft wird. Dabei nimmt das Kältemittel Wärmeenergie auf einem der Temperatur der Umgebungsluft entsprechenden Temperaturniveau mit. Da das Temperaturniveau der Wärmeenergie zur Versorgung des Heizsystems 30 zu gering ist, wird das Kältemittel über den Kältemittelverdichter 3 auf ein höheres Druckniveau verdichtet, wodurch sich eine höhere Temperatur des Kältemittels einstellt, die zur Einspeisung in das Hausheizsystem 30 geeignet ist. Das auf diese Weise hochtemperierte Kältemittel wird einem Wärmetauscher 10 zugeführt, in welchem das Kältemittel abkühlt und seine Energie auf das Wärmeträgerfluid des Heizsystems 30, beim Ausführungsbeispiel Speicherwasser, überträgt. Beim Durchlaufen des Wärmetauschers 10 kondensiert das sich abgekühlende Kältemittel, wird flüssig zum Luftwärmetauscher geführt, entspannt und durchläuft zur erneuten Aufnahme von Energie den Luftwärmetauscher 2 auf einem der Ansaugleistung des Verdichters 3 entsprechenden Druckniveau. Es handelt sich um einen geschlossenen Kreislauf, in welchem kontinuierlich über den Luftwärmetauscher 2 Wärmeenergie aus der Umgebungsluft aufgenommen wird, welche anschließend mit dem Kältemittelverdichter unter Zuführung von elektrischer Energie auf ein höheres Temperaturniveau transformiert und über den Wärmetauscher 10 auf das Heizsystem 30 übertragen werden kann.

Bei dem in Fig. 1 dargestellten Heizsystem 30 handelt es sich um einen über wärmeträgerfluidführende Rohrleitungen 31, 32 mit dem Wärmetauscher 10 verbundenen Wärmespeicher 33, dem die über den Wärmetauscher 10 aufgenommene Wärmeenergie mittels einer das Wärmeträgerfluid umwälzenden Pumpe 34 kontinuierlich zugeführt wird.

Die das Wärmeträgerfluid führenden Rohrleitungen 31, 32 des Heizsystems 30 verlaufen vom Gebäudeinneren durch das Erdreich hindurch zu dem ebenfalls unterhalb der Erdoberfläche 41 angeordneten Wärmetauscher 10, wodurch sich eine frostsichere Anordnung ergibt, insbesondere bei einem winterlichen Ausfall der Luftwärmepumpe 1. Die Wärmeträgerfluid führenden Rohrleitungen 31, 32, wie auch der Wärmetauscher 10, sind in frostfreier Tiefe des Erdreichs 40 angeordnet.

Wie sich der Darstellung in Fig. 1 weiter entnehmen lässt, sind die Rohrleitungen 31, 32 nicht direkt vom Erdreich 40 umgeben, sondern durch ein Versorgungsrohr 12 größeren Durchmessers hindurch verlegt. Darüber hinaus können in dem Versorgungsrohr 12 auch elektrische Leitungen zum Betrieb der Ventilatoren 16 bzw. des Kältemittelverdichters 3 sowie Steuerleitungen hindurch geführt sein. Die Unterfluraufnahme 6 ist in ihrem unteren Bereich mit einem stutzenartigen Anschluss 11 zum Anschluss des Versorgungsrohres 12 versehen.

Die Unterflursektion 5 sowie auch die Unterfluraufnahme 6 sind zur Vermeidung von Vereisungen, wie diese bei winterlichen Abtauvorgängen der Luftwärmepumpe 2, die bei niedrigen Außenlufttemperaturen von Zeit zu Zeit erforderlich sind, zumindest in der in den Figuren dargestellten Richtung schmaler ausgebildet als die Überflursektion 4. Im Falle einer Abtauung der Luftwärmepumpe 2 bei Außentemperaturen unterhalb des Gefrierpunkts tropft das bei der Abtauung der Luftwärmepumpe 2 entstehende Tauwasser seitlich, ggf. geführt über eine unterhalb des Luftwärmetauschers 2 angeordnete Tropfschale, in einen Drainagebereich 8, der das obere Ende der Unterfluraufnahme 6 im Bereich der Erdoberfläche 41 umgibt. Der Drainagebereich 8 wird gebildet von einem Schotterbett 16, das von einer randsteinartigen Umrandung 18 umgeben ist. In diesem Drainagebereich 8 kann das Tauwasser versickern, wodurch sich die Gefahr des Aufschichtens von Eis reduziert. Die Gefahr, dass das Eis den unteren Abtropfbereich des Tauwassers an der Überflursektion 4 erreicht und dort einen die Funktion der Luftwärmepumpe 2 beeinträchtigenden Rückstau bildet, wird durch den Abstand zwischen dem Drainagebereich 8 und dem höher liegenden Abtropfbereich des Tauwassers reduziert.

Wie die Fig. 1 und 2 weiter erkennen lassen, ist die Unterflursektion 5 mit der darüber liegenden Überflursektion 4 über einen Auflageflansch 9 verbunden. Der Auflageflansch 9 weist einen umlaufenden Kragen auf, der nach dem Einsetzen der Unterflursektion 5 in die Unterfluraufnahme 6 stirnseitig auf der Unterfluraufnahme 6 aufliegt, wodurch sich eine hängende Anordnung der Unterflursektion 5 innerhalb des Schachts 7 der Unterfluraufnahme 6 ergibt.

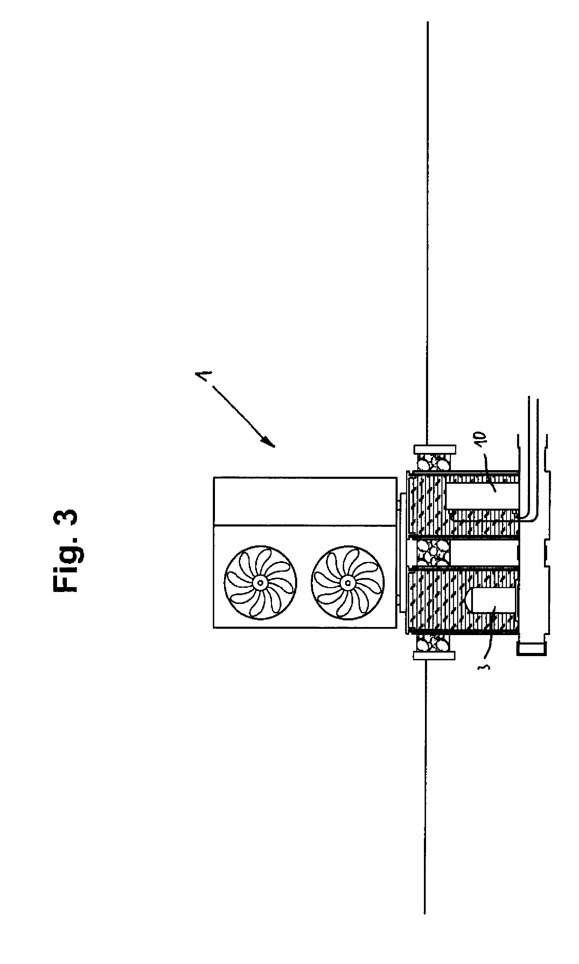

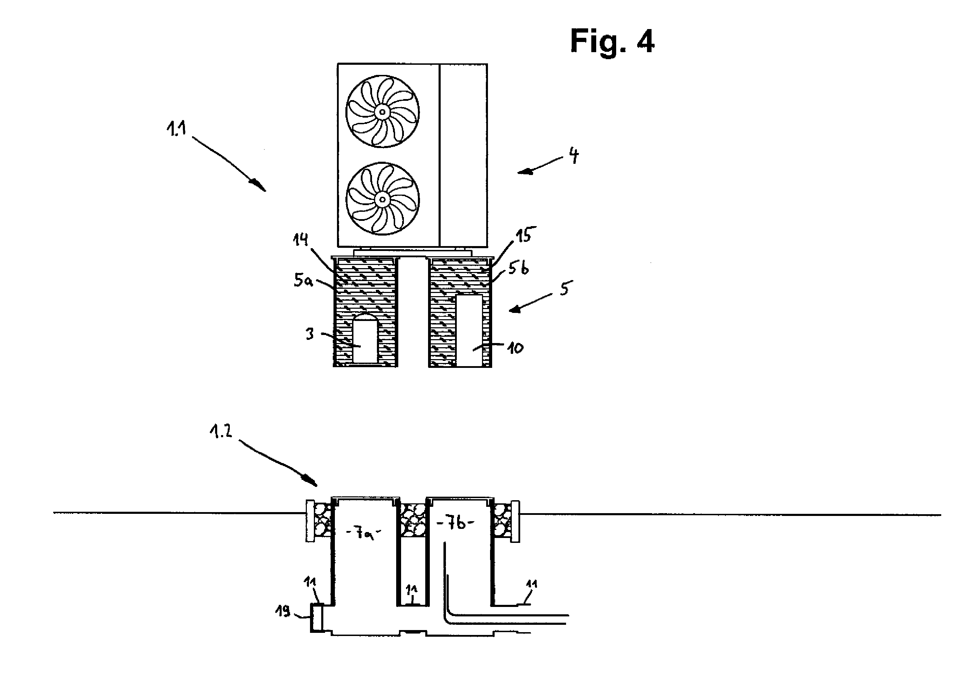

Im Gegensatz zu der Ausführung nach den Fig. 1 und 2 ist bei der Ausführung gemäß den Fig. 3 und 4 eine zweigeteilte Unterflursektion 5 vorgesehen, wobei in dem einen Teil 5a der Kältemittelverdichter 3 und in dem anderen Teil 5b der Wärmetauscher 10 der Luftwärmepumpe 1 angeordnet ist. Auch die Unterfluraufnahme 6 ist zweiteilig mit zwei Schächten 7a, 7b versehen, die korrespondierend zu den beiden Teilen 5a, 5b der Unterflursektion 5 ausgebildet sind, so dass beide Teile 5a, 5b jeweils in einen Schacht 7a, 7b einsetzbar sind. Diese Ausgestaltung bietet den Vorteil, dass die beiden Teile 5a, 5b mit unterschiedlichen Dämmmaterialien 14, 15 versehen werden können. In dem den Kältemittelverdichter 3 aufnehmenden Teil 5a kann ein Schalldämmmaterial 14, beispielsweise Steinwolle, angeordnet sein. In dem den Wärmetauscher 10 beinhaltenden Teil 5b kann ein Wärmedämmmaterial 15, beispielsweise Ortschaum, angeordnet sein, wodurch sich die Geräuschdämmung sowie die Frostsicherheit der Wärmepumpe 1 weiter verbessern lassen. Ein weiterer Vorteil dieser Ausgestaltung liegt darin, dass die beiden nebeneinander angeordneten Unterfluraufnahmen kleiner sind als bei der Ausführung gemäß den Fig. 1 und 2 und sich daher in den für das Versorgungsrohr 12 ohnehin auszuhebenden Schacht mit einsetzen lassen, ohne dass das Ende des Schachts zu verbreitern wäre.

Nachfolgend wird unter Bezugnahme auf die Darstellung in Fig. 2 das Verfahren zur Installation der Luftwärmepumpe 1 erläutert.

In einem ersten Schritt wird zunächst die Unterfluraufnahme 6 im Erdboden 40 versenkt und der Drainagebereich 8 angelegt. Hierzu wird bei einem Neubau noch im Rohbaustadium beispielsweise zugleich mit der Aushebung eines Erdlochs für das Kellergeschoss des Gebäudes eine Erdgrube ausgehoben und die Unterfluraufnahme 6 in diese Erdgrube eingesetzt. Zusätzlich wird ein Schacht in Richtung des Gebäudes ausgehoben, in welchem das Versorgungsrohr 12 als Leerrohr eingelegt und mit der Unterfluraufnahme 6 über den Anschluss 11 verbunden. Die Unterfluraufnahme kann mehr als einen Anschluss 11 aufweisen, so dass mehrere Unterfluraufnahmen 6 zur Installation mehrerer Luftwärmepumpen 1 oder zur Aufnahme einer Luftwärmepumpe 1 gemäß der Ausführung in den Fig. 3 und 4 zusammensteckbar sind. Bei der Ausführung gemäß Fig. 1 und 2 ist nur eine Unterfluraufnahme 6 vorgesehen, weshalb ein zweiter Anschluss 11 über einen Deckel 19 verschlossen ist. Nach erfolgtem Anschluss des Versorgungsrohres 12 können die Erdaushebungen wieder mit Erdreich 40 befüllt und der Drainagebereich 8 mit dem Schotterbett 17 und der Umrandung 18 angelegt werden. Da bis zur Inbetriebnahme der Luftwärmepumpe 1 oftmals noch eine größere Zeit vergeht, wird der Schacht 7 der Unterfluraufnahme 6 vorübergehend über einen Deckel 20 abgedeckt, so dass keine Verunreinigungen, Ungeziefer u. ä. in das Innere der Unterfluraufnahme 6 eindringen können.

Nachdem nun das Gebäude soweit fertiggestellt wurde, dass auch der Wärmespeicher 33 aufgestellt wurde, können die Rohrleitungen 31, 32 durch das Versorgungsrohr 12 hindurch geschoben und über eine Pumpe 34 mit dem Wärmespeicher 33 verbunden werden. Um das Einschieben der Rohrleitungen 31, 32 zu vereinfachen, weist das Versorgungsrohr keine engen Umlenkungen auf. Beispielsweise werden Winkelstücke 35 verwendet, die eine Umlenkung um nicht mehr als 30° bewirken.

Nach schlüsselfertiger Fertigstellung des Gebäudes wird die steckfertige Baueinheit 1.1 nach Entfernen des Deckels 20 oberhalb der Unterfluraufnahme 6 entweder von Hand oder bei größeren Luftwärmepumpe bzw. im Falle unwegsamen Geländes über ein geeignetes Hebezeug, beispielsweise einen Kran, positioniert und in Richtung des Schachts 7 abgesenkt, wobei die Unterfluraufnahme 5 in dem Schacht 7 versenkt wird. Um den Wärmetauscher 10 mit den Anschlussenden der Rohrleitungen 31, 32 des Heizungssystems 30 verbinden und elektrische Leitungen über entsprechende Stecker kontaktieren zu können, weist die Unterflursektion 5 eine seitliche Montageöffnung 13 auf. Die Absenkung der Unterflursektion 5 erfolgt zunächst bis auf eine Montagehöhe, in welcher die Montageöffnung 13 in etwa auf Höhe des oberen Randes der Unterfluraufnahme 6 liegt. In dieser Montageposition wird die Unterflursektion 5 über eine in den Figuren nicht dargestellte Sperrvorrichtung, bei der es sich beispielsweise um ein rasten- oder klinkenartiges Element handeln kann, gehalten. In der Montageposition kann der Installateur durch die Montageöffnung 13 hindurch greifen und die Verbindung der Elektroleitungen und die Verbindung der Rohrleitungen 31, 32 mit den entsprechenden Anschlüssen des Wärmetauschers 10 herstellen. Die Rohrleitungen 31, 32 bestehen aus Kunststoff oder Edelstahlwellrohr, wobei deren Enden um eine gewisse Wegstrecke vertikal bewegbar angeordnet sind, so dass nach deren Verbindung mit dem Wärmetauscher 10 die Unterflursektion 5 durch Entriegeln der Sperrvorrichtung vollständig erdversenkt, d. h. in den Schacht 7 der Unterfluraufnahme 6 abgesenkt werden kann, bis sie die in Fig. 1 dargestellte Position einnimmt. Die Rohrleitungen 31, 32 sind derart ausgebildet, dass sie sich beim Vollversenken der Unterflursektion 5 aus der Montageposition nach erfolgtem Anschluss an die Anschlüsse des Wärmetauschers 10 zum Ausgleich des vertikalen Abstands zwischen der Montage- und der Vollversenkungsstellung schlaufenförmig verformen. Zur Bildung dieser Schlaufen ist ein gewisser Freiraum im unteren Bereich der Unterflursektion 5 bzw. im Bereich unter der Unterflursektion 5 vorgesehen. In der vollständig abgesenkten Position liegt der Auflageflansch 9 unter dem Gewicht der gesamten Einheit 1.1 auf der Stirnseite der Unterfluraufnahme 6 auf. Die Überflursektion 4 steht auf dem Aufnahmeflansch 9, wohingegen die schmalere Unterflursektion 5 an dem Auflageflansch 9 aufgehängt ist, so dass sie den Grund des Schachts 7 nicht erreicht. Auf diese Weise wird eine Beschädigung der im Bodenbereich des Schachts verlaufenden Rohrleitungen 31, 32 vermieden und ein Aufnahmeraum für die sich beim Absenken der Unterflursektion 5 bildenden Schlaufen der Rohre 31, 32 freigehalten.

Die vorstehend beschriebene Luftwärmepumpe zeichnet sich insbesondere durch die erdversenkte Anordnung der Unterflursektion 5 aus. Die Unterflursektion 5 bildet eine Art Maschinenraum der Luftwärmepumpe, in welchem sowohl die geräuschverursachenden wie auch die frostgefährdeten Bauteile untergebracht sind, wodurch sich eine frostsichere, wenig Schall emittierende Bauweise ergibt. Zudem zeichnet sich die Luftwärmepumpe durch den kompakten Aufbau der steckfertigen Einheit 1.1 aus, weshalb es im Rahmen einer Baustellenmontage nicht erforderlich ist, Kältemittelkreise zu verlegen, so dass die erforderlichen Installationsarbeiten nicht durch auf die Kältetechnik spezialisierte Installateure vorgenommen werden müssen.

### Bezugszeichen:

- 1: Luftwärmepumpe
- 1.1: Einheit
- 1.2: Einheit
- 2: Luftwärmetauscher
- 3: Kältemittelverdichter
- 4: Überflursektion
- 5: Unterflursektion
- 6: Unterfluraufnahme
- 7: Schacht
- 8: Drainagebereich
- 9: Auflageflansch
- 10: Wärmetauscher, Heizfluidwärmetauscher
- 11: Anschluss
- 12: Versorgungsrohr
- 13: Montageöffnung
- 14: Dämmmaterial
- 15: Dämmmaterial
- 16: Ventilator
- 17: Schotterbett
- 18: Umrandung
- 19: Deckel
- 20: Deckel

- 30: Heizsystem
- 31: Rohrleitung
- 32: Rohrleitung
- 33: Wärmespeicher
- 34: Pumpe
- 35: Winkelstück

- 40: Erdreich
- 41: Erdoberfläche

## Patentansprüche

1. Luftwärmepumpe zur Gewinnung von Wärmeenergie aus Umgebungsluft mit einem von der Umgebungsluft überströmbaren Luftwärmetauscher (2) und einem Kältemittelverdichter (3) zur Erhöhung der Temperatur der aus der Umgebungsluft gewonnenen Wärmeenergie,
**dadurch gekennzeichnet,**
**dass** die Luftwärmepumpe eine Überflursektion (4) und eine erdversenkbare Unterflursektion (5) aufweist, wobei der Luftwärmetauscher (2) in der Überflursektion (4) und der Kältemittelverdichter (3) in der Unterflursektion (5) angeordnet ist.

2. Luftwärmepumpe nach Anspruch 1, **dadurch gekennzeichnet, dass** die Überflursektion (4) und die Unterflursektion (5) in baulicher Einheit miteinander verbunden sind.

3. Luftwärmepumpe nach einem der vorhergehenden Ansprüche, **gekennzeichnet durch** einen in der Unterflursektion (5) angeordneten Wärmetauscher (10) zur Abgabe der Wärmeenergie an ein Heizsystem (30).

4. Luftwärmepumpe nach einem der vorhergehenden Ansprüche, **gekennzeichnet durch** eine zumindest teilweise erdversenkbare Unterfluraufnahme (6), die einen Schacht (7) zur Aufnahme der insbesondere eine Montageöffnung (13) aufweisenden Unterflursektion (5) aufweist.

5. Luftwärmepumpe nach Anspruch 4, **dadurch gekennzeichnet, dass** die Unterflursektion (5) eine Sperrvorrichtung aufweist, über welche die Unterflursektion (5) in einer Montageposition in der Unterfluraufnahme arretierbar ist.

6. Luftwärmepumpe nach einem der vorhergehenden Ansprüche, **dadurch gekennzeichnet, dass** die Unterflursektion (5) und die Unterfluraufnahme (6) zumindest in einer Richtung schmaler als die Überflursektion (4) ausgebildet sind.

7. Luftwärmepumpe nach einem der vorhergehenden Ansprüche, **dadurch gekennzeichnet, dass** zwischen der Überflursektion (4) und der Unterflursektion (5) ein Auflageflansch (9) vorgesehen ist, wobei insbesondere die Überflursektion (4) oberhalb des Auflageflansches (9) stehend und die Unterflursektion (5) unterhalb des Auflageflansches (9) hängend angeordnet ist.

8. Luftwärmepumpe nach einem der vorhergehenden Ansprüche, **dadurch gekennzeichnet, dass** die Unterflursektion (5) zweigeteilt ausgebildet ist, wobei in einem ersten Teil (5a) der Kältemittelverdichter (3) und in einem zweiten Teil (5b) der Wärmetauscher (10) angeordnet ist.

9. Luftwärmepumpe nach Anspruch 8, **dadurch gekennzeichnet, dass** die Unterfluraufnahme (6) zwei Schächte (7) zur Aufnahme jeweils eines Teils (5a, 5b) aufweist.

10. Luftwärmepumpe nach einem der vorhergehenden Ansprüche, **dadurch gekennzeichnet, dass** die Unterfluraufnahme (6) mit einem Anschluss (11) für ein Versorgungsrohr (12) versehen ist.

11. Verfahren zur Freilandinstallation einer Luftwärmepumpe nach einem der vorhergehenden Ansprüche,
**dadurch gekennzeichnet,**
**dass** die Unterflursektion (5) zumindest teilweise erdversenkt und die Überflursektion (4) oberhalb des Erdbodens angeordnet wird.

12. Verfahren nach Anspruch 11, **dadurch gekennzeichnet, dass** die Unterfluraufnahme (6) zumindest teilweise erdversenkt angeordnet und anschließend die Unterflursektion (5) in die Unterfluraufnahme (6) eingesetzt wird.

13. Verfahren nach Anspruch 12, **dadurch gekennzeichnet, dass** die Unterfluraufnahme (6) vor dem Einsetzen der Unterflursektion (5) mit einem Versorgungsrohr (12) verbunden wird.

14. Verfahren nach Anspruch 13, **dadurch gekennzeichnet, dass** in dem Versorgungsrohr (12) im Anschluss an dessen Verbindung mit der Unterflursektion (5) Rohrleitungen (31, 32) eines Heizsystems (30) verlegt werden.

15. Verfahren nach Anspruch 14, **dadurch gekennzeichnet, dass** die Rohrleitungen (31, 32) durch eine über eine seitliche Montageöffnung (13) erfolgende Handhabung an den Wärmetauscher (10) angeschlossen werden.

16. Verfahren nach Anspruch 15, **dadurch gekennzeichnet, dass** die Unterflursektion (5) zum Anschluss der Rohrleitungen (31, 32) zunächst in eine Montagestellung abgesenkt wird, in welcher die Montageöffnung (13) in etwa in Höhe des oberen Endes der Unterfluraufnahme (6) liegt, und dass die Unterflursektion (5) anschließend vollversenkt wird.

17. Verfahren nach Anspruch 16, **dadurch gekennzeichnet, dass** die Unterflursektion (5) über eine Sperrvorrichtung in der Montagestellung gehalten wird und die Vollversenkung durch Entsperren der Sperrvorrichtung erfolgt.

18. Verfahren nach einem der Ansprüche 16 oder 17, **dadurch gekennzeichnet, dass** sich die Rohrleitungen (31, 32) beim Vollversenken der Unterflursektion (5) schlaufenförmig aufrollen.

19. Freilandanordnung einer Luftwärmepumpe nach einem der Ansprüche 1 bis 10, bei welcher die Überflursektion (4) oberhalb des Erdbodens und die Unterflursektion (5) zumindest teilweise innerhalb des Erdbodens angeordnet ist.
